# EUROPÄISCHE PATENTSCHRIFT

(11) **EP 3 624 961 B1**
(45) Veröffentlichungstag und Bekanntmachung des Hinweises auf die Patenterteilung: **13.01.2021**
(21) Anmeldenummer: 18714230.2
(22) Anmeldetag: 27.03.2018
(51) Int. Cl.: B21B 99/00

(54) **HÜTTENTECHNISCHE VORRICHTUNG**
METALLURGICAL DEVICE
DISPOSITIF MÉTALLURGIQUE

(30) Priorität: 15.05.2017 DE 102017208119
(43) Veröffentlichungstag der Anmeldung: 25.03.2020
(73) Patentinhaber: SMS Group GmbH, 40237 Düsseldorf (DE)
(72) Erfinder: ALKEN, Johannes, 57076 Siegen (DE); MÜLLER, Torsten, 57223 Kreuztal (DE); SUDAU, Peter, 57271 Hilchenbach (DE)
(74) Vertreter: Kross, Ulrich
(86) Internationale Anmeldenummer: PCT/EP2018/057783
(87) Internationale Veröffentlichungsnummer: WO 2018/210473

(56) Entgegenhaltungen:
- DE-A1-102007 035 453
- US-A- 3 828 600
- US-A1- 2016 261 168

## Beschreibung

Die Erfindung betrifft eine hüttentechnische Vorrichtung, insbesondere eine Gießanlage, ein Walzwerk oder eine Bandanlage, umfassend mindestens ein um eine Achse rotierendes Maschinenteil, wobei an oder in dem Maschinenteil ein Energieverbraucher angeordnet ist, der mit einer Energiequelle in elektrischer Verbindung steht, wobei die Energiequelle als Generator ausgebildet ist, der mit dem rotierenden Maschinenteil in drehfester Verbindung steht, wobei der Generator ansonsten frei ist von einer mechanischen Verbindung zu der hüttentechnischen Vorrichtung, wobei der Generator ein Gehäuseelement aufweist, an dem an einem von der Achse radial beabstandeten Ort mindestens eine Exzentermasse angeordnet ist.

Bei modernen hüttentechnischen Anlagen wie beispielsweise im Falle einer Gießanlage, eines Walzwerks oder einer Bandanlage, besteht immer mehr der Bedarf, Anlagenteile mit einer Sensorik zur Erfassung von Betriebsparametern auszustatten. Die meisten hier zum Einsatz kommenden Sensoren benötigen dazu eine Energieversorgung, die meist aus dem Stromnetz oder von einer Batterie oder einem Akkumulator zur Verfügung gestellt wird. Sind Betriebsparameter bei rotierenden Bauteilen zu erfassen, muss zumeist entweder auf Batterie- bzw. auf Akku-Betrieb gesetzt werden oder aber es müssen mit verschiedenen technischen Hilfsmitteln Energie in das rotierende System eingebracht werden, zum Beispiel über Schleifkontakte oder auf induktive Weise.

Beispiele für die Ausstattung von Systemen, häufig von Wälzlagern, mit einer Sensorik offenbaren die DE 199 44 652 A1, die EP 2 952 870 A1, die DE 602 25 514 T1 und die EP 1 292 831 B1.

Die WO 2009/080178 A2 zeigt für eine Druckmaschine ein System, bei dem zur Energieversorgung ein Generator eingesetzt wird, der Bewegungen eines Anlagenteils nutzt und per Energieumwandlung in elektrische Energie umwandelt.

Weitere ähnliche Lösungen zeigen die DE 199 10 197 C1, die CN 103302112 B und die KR 1209006 B1.

Eine Vorrichtung der eingangs genannten Art ist aus der DE 10 2007 035 453 A1 bekannt und bildet die Basis für den Oberbegriff von Anspruch 1. Andere Lösungen zeigen die US 3 828 600 A und die US 2016/261168 A1. Nachteilig ist bei den vorbekannten Energieübertragungssystemen zunächst eine hohe Belastung infolge der rauen, verschmutzten Umgebung im Bereich der hüttentechnischen Anlage. Demgemäß sind die Kosten relativ hoch, die aufgewendet werden müssen, damit die zum Einsatz kommenden Geräte den Umgebungsbedingungen standhalten. Die genannten Bedingungen führen allerdings auch nachteilig zu einer höheren Fehleranfälligkeit der zum Einsatz kommenden Elemente.

Ferner ist der Wartungsaufwand entsprechend hoch, was hohe Kosten nach sich zieht.

Nachteilig ist ferner, dass für die Wartung das rotierende System abgeschaltet werden muss. Dies führt zu hohen Betriebskosten. Die Montage und Demontage der Elemente zur Energieübertragung kann nicht bei rotierenden Komponenten erfolgen. Im Falle des Batteriebetriebs besteht der Nachteil, dass die Batterien regelmäßig ausgetauscht werden müssen. Werden Akkus eingesetzt, müssen diese regelmäßig geladen werden. Nachteilig ist in diesem Zusammenhang weiterhin, dass das rotierende Bauteil hierfür außer Betrieb gesetzt werden muss. Dies führt zu erhöhten Betriebskosten. Nachteilig ist ferner, dass Batterien nur von außen zugänglich angebracht werden können, da sie sonst nicht gewechselt werden können. Wegen der rauen, verschmutzten Umgebung im Bereich der hüttentechnischen Anlage ist dies aufwendig.

Der Erfindung liegt daher die **Aufgabe** zugrunde, eine hüttentechnische Vorrichtung, insbesondere eine Gießanlage, ein Walzwerk oder eine Bandanlage, der eingangs genannten Art so auszugestalten, dass der Energieverbraucher dauerhaft trotz rauen Umgebungsbedingungen mit Energie versorgt werden kann und hierbei die oben genannten Nachteile vermieden werden können.

Die **Lösung** dieser Aufgabe durch die Erfindung ist dadurch gekennzeichnet, dass der Generator zwei parallel zueinander angeordnete und axial voneinander beabstandete Metallscheiben aufweist, wobei zwischen den Metallscheiben eine Anzahl Spulenringe angeordnet ist, die auf einem Trägerelement angeordnet sind, wobei die Metallscheiben Bestandteil des Gehäuseelements sind, wobei das Gehäuseelement mittels Lagern relativ zum rotierenden Maschinenteil drehbar gelagert ist und wobei das Trägerelement drehfest mit dem rotierenden Maschinenteil verbunden ist.

Das Maschinenteil kann dabei eine Rolle zur Förderung von Gieß- oder Walzgut sein.

Der Energieverbraucher kann einen Sensor umfassen. Er kann auch eine Sendeeinheit zum Senden eines Signals umfassen.

Der Generator kann eine elektronische Steuerung/Regelung zur Steuerung/Regelung der abgegebenen Energie umfassen.

Der Generator kann zusätzlich einen Energiespeicher, z. B. in Form eines Akkumulators oder eines Kondensators beinhalten.

Der Generator kann ein Axialfluss-Generator oder ein Radialfluss-Generator sein.

Hierbei ist weiterhin bevorzugt vorgesehen, dass mindestens eine Metallscheibe, vorzugsweises beide

Metallscheiben, mit einer mehrpoligen Magnetscheibe verbunden ist, die zwischen der Metallscheibe und dem Trägerelement angeordnet ist.

Das vorgeschlagene Konzept stellt demgemäß darauf ab, vorzugsweises innerhalb einer rotierenden Komponente der hüttentechnischen Anlage Energie zu erzeugen, wozu ein Generator in das Bauteil eingesetzt wird. Der Generator nutzt die Drehbewegung des rotierenden Bauteils, um die benötigte Energie bereitzustellen. Als Generator kommt vorzugsweise ein Axialfluss- oder ein Radialflussgenerator zum Einsatz, aber auch jeder andere Generatortyp ist denkbar.

Da es keine Verbindung des Gehäuses des Generators zum äußeren, ruhenden Bezugssystem gibt, kann demgemäß keine Drehmomentstützung von außen her erfolgen. Daher ist erfindungsgemäß das Gehäuse mit dem rotierenden Maschinenteil fest verbunden. Die im Gehäuse drehbar gelagerten Metallscheiben mit den mehrpoligen Magnetscheiben werden mit einer exzentrischen Masse versehen, die sich unter Einwirkung der Schwerkraft relativ zum Gehäuse drehen kann.

Die Spulenwicklungen mit den zugehörigen Anschlüssen für ein Energiemanagement-System rotieren mit, bleiben also bezogen auf das rotierende Bauteil ortsfest. Durch die elektrische Auslegung des Generators - namentlich mit Blick auf dessen Spulenzahl, Wicklungszahl, Zahl der Permanentmagnete, etc. - und die mechanische Auslegung - namentlich hinsichtlich der Masse des exzentrisch angeordneten Gewichts, dem Durchmesser des Generators, etc. - kann der Generator für beliebige Drehzahlbereiche hinsichtlich der erzeugten Leistung optimiert werden.

Bevorzugt ist direkt am Generator ein Energiemanagement-System integriert, welches sofort die geregelte Versorgungsspannung beispielsweise für einen integrierten Sensor bereitstellt.

Der Vorteil des so ausgestatteten Systems mit dem integrierten Generator liegt zunächst darin, dass keine Gefahr der Zerstörung durch äußere Einflüsse (Verschmutzung, Feuchtigkeit, mechanische Belastung) besteht, da der Generator, wie bevorzugt vorgesehen, innerhalb der rotierenden Komponente verbaut ist.

Der Generator erzeugt immer dann genügend Energie, wenn diese benötigt wird, wenn also das Bauteil rotiert.

Ein separates Laden von Akkus oder ein Wechseln von Batterien ist nicht mehr erforderlich.

Das vorgeschlagene System kann bereits bei einer Neumontage integriert werden, so dass dann keine Folgekosten mehr auftreten.

In der Zeichnung ist ein Ausführungsbeispiel der Erfindung dargestellt. Es zeigen:
- Fig. 1: schematisch in der Vorderansicht einen Generator, der mit einem hier nicht dargestellten rotierenden Maschinenteil einer hüttentechnischen Vorrichtung in Drehverbindung steht, gesehen in Richtung der Achse des rotierenden Maschinenteils,
- Fig. 2: die zur Figur 1 zugehörige Seitenansicht und
- Fig. 3: die zur Figur 1 zugehörige Seitenansicht eines Generators, der hier in einer möglichen konkreten Ausgestaltung dargestellt ist.

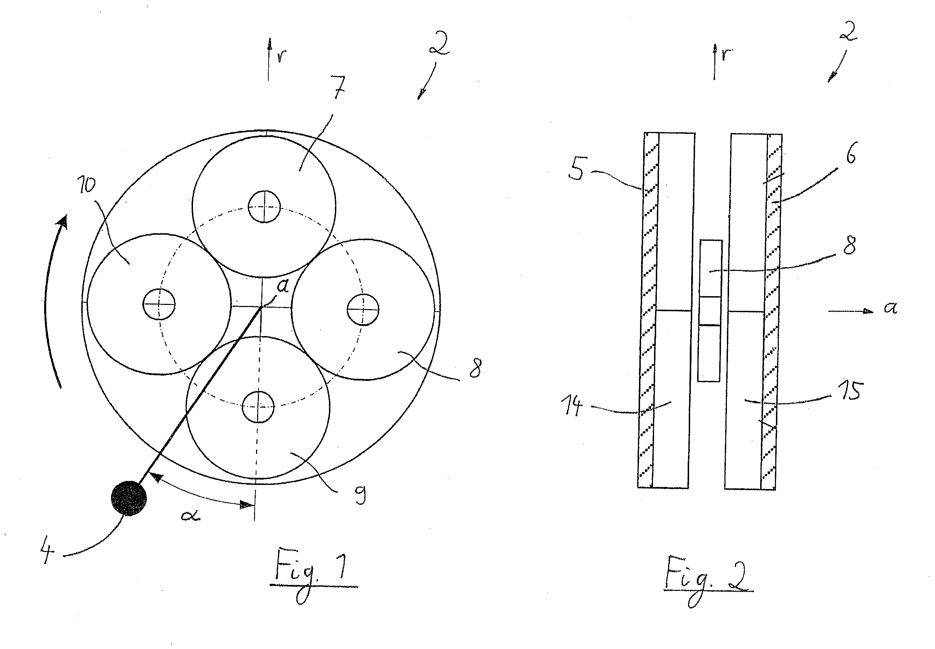

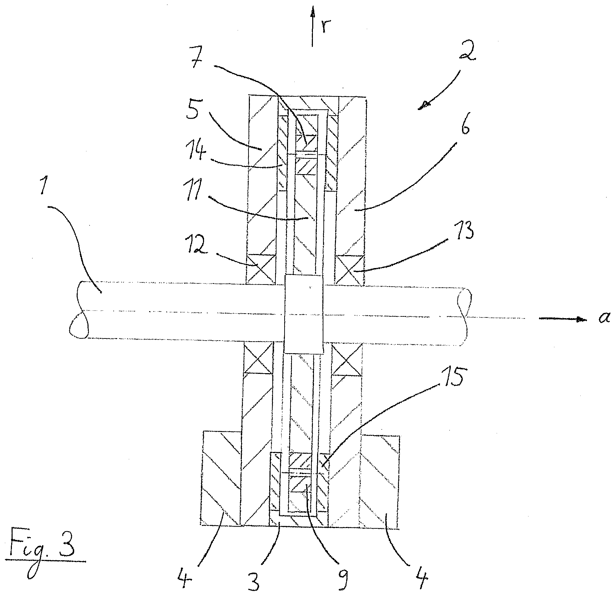

In Figur 1 und Figur 2 ist zunächst rein schematisch das Prinzip des Aufbaus einer erfindungsgemäßen Energiequelle in Form eines Generators 2 skizziert. Der Generator 2 dient als Energiequelle für einen elektrischen Verbraucher, der nicht dargestellt ist. Vorgesehen ist, dass die Rotation eines Maschinenteil 1 (siehe Figur 3) einer hüttentechnischen Anlage dazu genutzt wird, elektrische Energie zu erzeugen, mit der der elektrische Verbraucher versorgt wird; hierbei handelt es sich beispielsweise um einen Sensor, der definierte Betriebsparameter erfasst und beispielsweise über eine Sendeeinheit zu einer Empfangseinheit sendet, mit der besagte Betriebsparameter überwacht werden.

Der Generator besteht ausweislich der schematischen Darstellung nach den Figuren 1 und 2 aus zwei Metallscheiben 5 und 6, die in Richtung der Achse a parallel zueinander, allerdings beabstandet angeordnet sind. Mit jeder der beiden Metallscheiben 5, 6 ist je eine mehrpolige Magnetscheibe 14 bzw. 15 verbunden.

Zwischen den beiden Magnetscheiben 14, 15 ist eine Anzahl Spulenringe 7, 8, 9, 10 angeordnet, die in Drehverbindung mit dem rotierenden Maschinenteil stehen (Details hierzu siehe Figur 3).

Wenn das Maschinenteil rotiert und demgemäß auch die Spulenringe 7, 8, 9, 10 mitdrehen, wird bei deren Vorbeiführen an den Magnetscheiben 14, 15 eine elektrische Spannung induziert, die zur Versorgung des elektrischen Verbrauchers genutzt wird.

Eine konkrete maschinenbautechnische Umsetzung des Generators 2 ist in Figur 3 skizziert. Das rotierende Maschinenteil 1 ist hier schematisch als Welle skizziert und dreht im Betrieb der hüttentechnischen Anlage um die Achse a. Diese Drehung wird genutzt, um mit dem Generator 2 elektrische Energie zu gewinnen.

Mit dem Maschinenteil 1 drehfest verbunden ist ein Trägerelement 11, welches die Spulenringe 7, 8, 9, 10 trägt. Das Gehäuseelement 3 umfasst die beiden seitlichen Metallscheiben 5 und 6 sowie die mehrpoligen Magnetscheiben 14 und 15, die mit Luftspalt zu dem Trägerelement 11 bzw. zu den Spulenringen 7, 8, 9, 10 angeordnet sind. Die Metallscheiben 5 und 6 und damit das gesamte Gehäuseelement 3 sind mittels zweier Lager 12 und 13 auf dem Maschinenteil 1 drehbar angeordnet. Ferner zu erkennen sind zwei Exzentermassen 4, die am Gehäuseelement 3 angeordnet sind.

Bei Drehung des Maschinenteils 1 dreht sich folglich das Trägerelement 11 mit den Spulenringen 7, 8, 9, 10 mit; das Gehäuseelement 3 wird durch die Exzentermassen 4 in der oben erläuterten Weise daran gehindert, sich mitzudrehen, wenngleich es nicht zur Umgebung hin abgestützt ist.

Folglich kann der Generator 2 beispielsweise im Inneren einer rotierenden Welle der hüttentechnischen Anlage angeordnet werden, um aus der Rotation der Welle elektrische Energie zu gewinnen.

Bevorzugt sind somit zwei mehrpolige Magnetscheiben 14, 15 vorgesehen, die mittels der beiden Metallscheiben 5, 6 (die als Eisenrückschlussplatten fungieren) einen geschlossenen Magnetkreis bilden. Im Luftspalt zwischen den Magnetscheiben ist das Trägerelement 11 mit den Spulenringen 7, 8, 9, 10 angeordnet. Die Anzahl der Spulen ist mit der Anzahl der Magnetpole der Magnetscheiben gekoppelt. Die Anzahl der Magnetpole kann hierbei variiert werden; bevorzugt sind zwischen 4 und 20 Magnetsegmente (Magnetpole) auf der Magnetscheibe.

Der Luftspalt zwischen der Oberfläche der Spulenringe und den Magnetscheiben liegt bevorzugt im Bereich von 0,5 mm.

Die geometrischen Größen des Generators können ansonsten an die Gegebenheiten angepasst werden, d. h. namentlich mit Blick auf die Frage, wie viel Bauraum zur Verfügung steht, um den Generator 2 aufzunehmen. Ein Beispiel für den zur Verfügung stehenden Bauraum in einer Welle einer hüttentechnischen Anlage ist 150 mm Durchmesser und 200 mm axiale Länge. Bei diesem Bauraum ist ein Generator problemlos realisierbar, der bei Rotation der Welle eine Leistung von ca. 250 mW bereitstellt.

Durch die axial relativ kompakte Bauweise können gegebenenfalls auch mehr als ein Generator axial nebeneinander angeordnet werden.

### Bezugszeichenliste:

- 1: rotierendes Maschinenteil
- 2: Energiequelle (Generator)
- 3: Gehäuseelement
- 4: Exzentermasse
- 5: Metallscheibe
- 6: Metallscheibe
- 7: Spulenring
- 8: Spulenring
- 9: Spulenring
- 10: Spulenring
- 11: Trägerelement
- 12: Lager
- 13: Lager
- 14: mehrpolige Magnetscheibe
- 15: mehrpolige Magnetscheibe

- a: Achse
- r: radiale Richtung

## Patentansprüche

1. Hüttentechnische Vorrichtung, insbesondere Gießanlage, Walzwerk oder Bandanlage, umfassend mindestens ein um eine Achse (a) rotierendes Maschinenteil (1), wobei an oder in dem Maschinenteil (1) ein Energieverbraucher angeordnet ist, der mit einer Energiequelle (2) in elektrischer Verbindung steht, wobei die Energiequelle (2) als Generator ausgebildet ist, der mit dem rotierenden Maschinenteil (1) in drehfester Verbindung steht, wobei der Generator (2) ansonsten frei ist von einer mechanischen Verbindung zu der hüttentechnischen Vorrichtung, wobei der Generator (2) ein Gehäuseelement (3) aufweist, an dem an einem von der Achse (a) radial (r) beabstandeten Ort mindestens eine Exzentermasse (4) angeordnet ist,
**dadurch gekennzeichnet, dass**
der Generator (2) zwei parallel zueinander angeordnete und axial voneinander beabstandete Metallscheiben (5, 6) aufweist, wobei zwischen den Metallscheiben (5, 6) eine Anzahl Spulenringe (7, 8, 9, 10) angeordnet ist, die auf einem Trägerelement (11) angeordnet sind, wobei die Metallscheiben (5, 6) Bestandteil des Gehäuseelements (3) sind, wobei das Gehäuseelement (3) mittels Lagern (12, 13) relativ zum rotierenden Maschinenteil (1) drehbar gelagert ist und wobei das Trägerelement (11) drehfest mit dem rotierenden Maschinenteil (1) verbunden ist.

2. Vorrichtung nach Anspruch 1, **dadurch gekennzeichnet, dass** das Maschinenteil (1) eine Welle oder Rolle zur Förderung von Gieß- oder Walzgut ist.

3. Vorrichtung nach Anspruch 1 oder 2, **dadurch gekennzeichnet, dass** der Energieverbraucher einen Sensor umfasst.

4. Vorrichtung nach einem der Ansprüche 1 bis 3, **dadurch gekennzeichnet, dass** der Energieverbraucher eine Sendeeinheit zum Senden eines Signals umfasst.

5. Vorrichtung nach einem der Ansprüche 1 bis 4, **dadurch gekennzeichnet, dass** der Generator (2) eine elektronische Regelung zur Regelung der abgegebenen Energie umfasst.

6. Vorrichtung nach einem der Ansprüche 1 bis 5, **dadurch gekennzeichnet, dass** der Generator (2) ein Axialfluss-Generator ist.

7. Vorrichtung nach einem der Ansprüche 1 bis 5, **dadurch gekennzeichnet, dass** der Generator (2) ein Radialfluss-Generator ist.

8. Vorrichtung nach einem der Ansprüche 1 bis 7, **dadurch gekennzeichnet, dass** mindestens eine Metallscheibe (5, 6), vorzugsweises beide Metallscheiben, mit einer mehrpoligen Magnetscheibe (14, 15) verbunden ist, die zwischen der Metallscheibe (5, 6) und dem Trägerelement (11) angeordnet ist.

## Claims

1. Metallurgical device, particularly casting plant, rolling mill or strip processing line, comprising at least one machine part (1) rotating about an axis (a), wherein an energy consumer electrically connected with an energy source (2) is arranged at or in the machine part (1), wherein the energy source (2) is constructed as a generator which is connected with the rotating machine part (1) to be secure against rotation relative thereto, wherein the generator (2) is otherwise free from a mechanical connection with the metallurgical device and wherein the generator (2) comprises a housing element (3) at which at least one eccentric mass (4) is arranged at a location radially (r) spaced from the axis (a),
**characterised in that**
the generator (2) comprises two mutually parallel and axially spaced-apart metal discs (5, 6), wherein a plurality of coil rings (7, 8, 9, 10) arranged on a support element (11) is arranged between the metal discs (5, 6), wherein the metal discs (5, 6) are a component of the housing element (3), wherein the housing element (3) is mounted by means of bearings (12, 13) to be rotatable relative to the rotating machine part (1) and wherein the support element (11) is connected with the rotating machine part (1) to be secure against relative rotation.

2. Device according to claim 1, **characterised in that** the machine part (1) is a shaft or roller for conveying cast or rolled stock.

3. Device according to claim 1 or 2, **characterised in that** the energy consumer comprises a sensor.

4. Device according to any one of claims 1 to 3, **characterised in that** the energy consumer comprises a transmitting unit for transmitting a signal.

5. Device according to any one of claims 1 to 4, **characterised in that** the generator (2) comprises an electronic regulator for regulating the delivered energy.

6. Device according to any one of claims 1 to 5, **characterised in that** the generator (2) is an axial flux generator.

7. Device according to any one of claims 1 to 5, **characterised in that** the generator (2) is a radial flux generator.

8. Device according to any one of claims 1 to 7, **characterised in that** at least one metal disc (5, 6), preferably both metal discs, is connected with a multi-pole magnetic disc (14, 15) arranged between the metal disc (5, 6) and the support element (11).

## Revendications

1. Dispositif sidérurgique, en particulier installation de coulée continue, laminoir ou installation de production de bandes, qui comprend au moins une pièce de machine (1) rotative autour d'un axe (a) ; dans lequel un consommateur d'énergie est disposé contre ou dans la pièce de machine (1), qui est mis en liaison électrique avec une source d'énergie (2) ; dans lequel la source d'énergie (2) est réalisée sous la forme d'un générateur d'électricité qui est solidaire en rotation de la pièce de machine rotative (1); dans lequel le générateur d'électricité (2) est par ailleurs exempt d'une liaison mécanique au dispositif sidérurgique ; dans lequel le générateur d'électricité (2) présente un élément (3) faisant office de logement qui est disposé à l'endroit occupé par au moins une masse excentrique (4) prévue à l'écart, en direction radiale (r), de l'axe (a) ;
**caractérisé en ce que** le générateur d'électricité (2) présente deux disques métalliques (5, 6) prévus à l'écart l'un de l'autre en direction axiale et disposés parallèlement l'un à l'autre ; dans lequel on prévoit, entre les disques métalliques (5, 6), un certain nombre de bobines annulaires (7, 8, 9, 10) qui sont disposées sur un élément (11) faisant office de support ; dans lequel les disques métalliques (5, 6) représentent un constituant de l'élément (3) faisant office de logement ; dans lequel l'élément (3) faisant office de logement est monté en rotation au moyen de paliers (12, 13) par rapport à la pièce de machine rotative (1) ; et dans lequel l'élément (11) faisant office de support est solidaire en rotation de la pièce de machine rotative (1).

2. Dispositif selon la revendication 1, **caractérisé en ce que** la pièce de machine (1) représente un arbre ou un rouleau qui est destiné au transport du produit de coulée ou de laminage.

3. Dispositif selon la revendication 1 ou 2, **caractérisé en ce que** le consommateur d'énergie comprend un capteur.

4. Dispositif selon l'une quelconque des revendications 1 à 3, **caractérisé en ce que** le consommateur d'énergie comprend une unité d'émission qui est destinée à l'émission d'un signal.

5. Dispositif selon l'une quelconque des revendications 1 à 4, **caractérisé en ce que** le générateur d'électricité (2) comprend un réglage électronique qui est destiné au réglage de l'énergie délivrée.

6. Dispositif selon l'une quelconque des revendications 1 à 5, **caractérisé en ce que** le générateur d'électricité (2) représente un générateur d'électricité du type à flux axial.

7. Dispositif selon l'une quelconque des revendications 1 à 5, **caractérisé en ce que** le générateur d'électricité (2) représente un générateur d'électricité du type à flux radial.

8. Dispositif selon l'une quelconque des revendications 1 à 7, **caractérisé en ce qu'**au moins un disque métallique (5, 6), de préférence les deux disques métalliques, est/sont reliés à un disque magnétique multipolaire (14, 15) qui est disposé entre les disques métalliques (5, 6) et l'élément (11) faisant office de support.
